# EUROPEAN PATENT SPECIFICATION

(11) **EP 2 130 619 B1**
(45) Date of publication and mention of the grant of the patent: **07.01.2015**
(21) Application number: 09161855.3
(22) Date of filing: 03.06.2009
(51) Int. Cl.: B09B 3/00, A62D 3/40

(54) **Apparatus and method for inertizing materials containing asbestos**
Vorrichtung und Verfahren zur Inertisierung von Asbest enthaltenden Substanzen
Appareil et procédé pour rendre inerte des matériaux contenant de l'amiante

(30) Priority: 03.06.2008 IT MI20081014
(43) Date of publication of application: 09.12.2009
(73) Proprietor: Aspireco - Società a Responsabilità Limitata, 25085 Gavardo (Brescia) (IT)
(72) Inventor: Frapporti, Carlo, 25085 Gavardo BS (IT)
(74) Representative: Modiano, Micaela Nadia

(56) References cited:
- WO-A1-02/087796
- US-A1- 2003 228 196

## Description

The present invention relates to an apparatus and a method for inertizing materials containing asbestos using the apparatus.

Asbestos is constituted by thin but densely packed fibers, which make it a material that is very strong from the mechanical standpoint but at the same time flexible and resistant to the action of chemical and biological agents, to abrasion and to wear.

Asbestos has a good heat resistance despite not being a refractory material: it in fact withstand temperatures of even 500°C and, when mixed with other substances, even higher temperatures.

Due to its properties, up to 1992, the year in which its use was banned in Italy, it was used widely in the industrial field and in particular for thermal insulations.

In the building sector, asbestos, of which the chrysotile form is the most widespread, mixed with cement, has been used extensively in the manufacture of corrugated panels (for roofings) and flat panels (for partitions, claddings, ceilings, et cetera) in pipes, stacks, and other various products.

Other types of asbestos, including crocidolite and amosite, were used in smaller quantities with respect to the chrysotile type due to the limited quantities available in nature.

They are in fact found in particular articles or mixed with chrysotile in minimal quantities.

As mentioned earlier, the use of asbestos was banned in Italy in 1992, since asbestos, by friction, rubbing or wear breaks up and releases very light and volatile fibers that can be inhaled easily.

The dangerousness of asbestos absorbed by inhaling can cause severe diseases, which can be summarized schematically as asbestosis (pulmonary fibrosis that restricts respiratory capacity), lung cancer, pleural mesothelioma, and so forth.

To perform the disposal of rejects, waste or otherwise materials containing asbestos, it is known in the art to convey said materials to controlled landfills, in which means are prepared which prevent the spread into the atmosphere of the inhalable fibers that can be released by asbestos.

This way of proceeding does not solve the problem radically, since the potential dangerousness of fibrous asbestos remains, and accordingly there can be pollution phenomena that can be caused by factors that in any way might elude the protective characteristics that ought to be provided in the landfill.

In order to obviate this problem, in recent years techniques for inertizing asbestos have been developed which consist in subjecting the rejects, waste or otherwise materials containing asbestos, particularly of the chrysotile type, to thermal treatments in order to convert them into a chemically inert product. These known types of inertizing technique are not free from drawbacks, which include the fact that they are reserved exclusively to the treatment of asbestos of the chrysotile type and that the apparatuses used for their execution generally comprise a simple tunnel-type furnace of the type used in the ceramics industry, provided with a suitable system for loading and unloading the material that does not allow a suitable adjustment of the temperatures as a function of the type of asbestos to be treated.

WO 02/087796 A1 discloses a process and plant for disposal of products containing asbestos, the process comprising the stages of first breaking-up the products, grinding, stocking, furnace inertization, and final storage in containers, wherein at least the first four of these stages are carried out in an isolation cell kept at lightly lower pressure with respect to the outside environment.

The aim of the present invention is to eliminate the drawback cited above, providing an apparatus and a method for inertizing materials containing asbestos that allows to transform fibrous asbestos in other chemically inert non-fibrous silicates.

Within this aim, an object of the present invention is to provide an apparatus and a method for inertizing materials containing asbestos that uses components that are easily available, entailing modest costs.

This aim, as well as these and other objects that will become better apparent hereinafter, are achieved by an apparatus for inertizing materials containing asbestos, comprising:
- a unit for granulating the material introduced in the apparatus, in order to give said material a uniform particle size distribution, ensuring the thermal absorption of said material in subsequent operations,
- a preheating unit, which is arranged consecutively with respect to said granulation unit for the evaporation of the molecules of water contained in said material that exits from said granulation unit,
- a dehydroxylation unit, which is arranged consecutively with respect to said preheating unit to eliminate the hydro-hydroxyl group that is present in the crystalline structure of the asbestos contained in said material that exits from said preheating unit,
- a decomposition unit, which is arranged consecutively with respect to said dehydroxylation unit for the decomposition, by means of heat, of said material that exits from said dehydroxylation unit, modifying its crystalline structure into an irreversible amorphous structure,
- a reheating unit, which is arranged consecutively with respect to said decomposition unit in order to raise the temperature of the exhaust gases produced by combustion and suppress volatile organic substances (VOS),
- a filtration unit, which is arranged consecutively with respect to said reheating unit to suppress residual effluents before they are introduced in the atmosphere.

Further characteristics and advantages of the present invention will become better apparent from the description of a preferred but not exclusive embodiment of an apparatus for inertizing materials containing asbestos, according to the invention, illustrated by way of non-limiting example in the accompanying drawings, wherein:

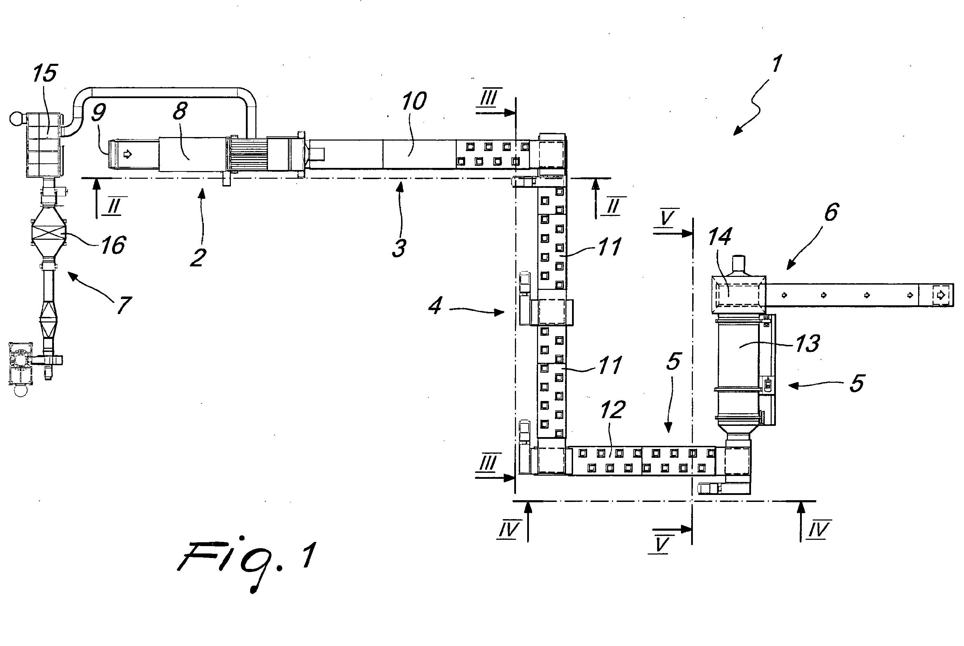

Figure 1 is a plan view of an embodiment of an apparatus for inertizing materials containing asbestos, according to the present invention;

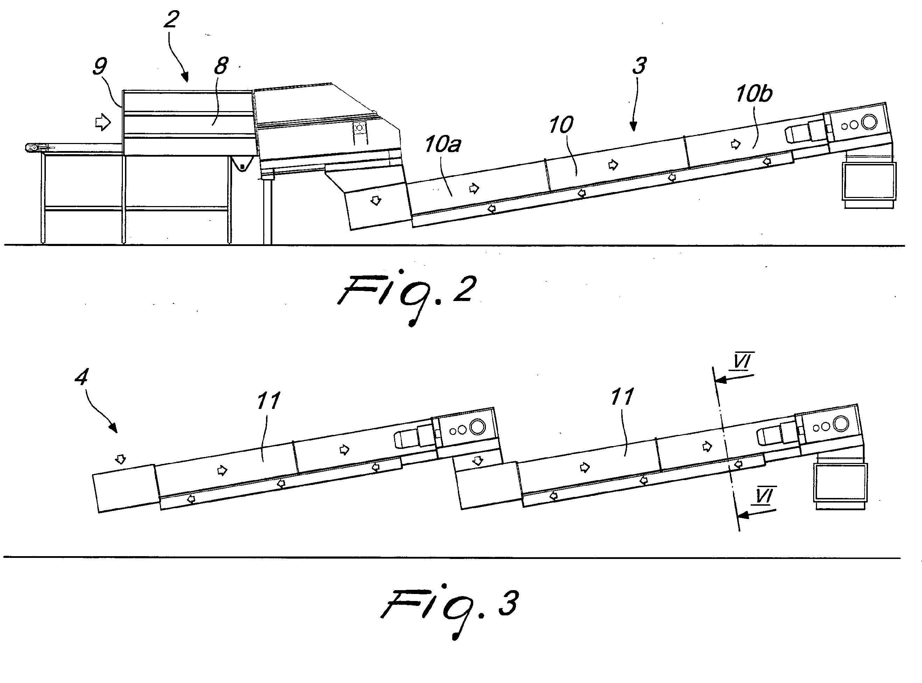

Figure 2 is a sectional view of the inertizing apparatus shown in Figure 1, taken along the line II-II;
Figure 3 is a sectional view of the inertizing apparatus shown in Figure 1, taken along the line III-III;

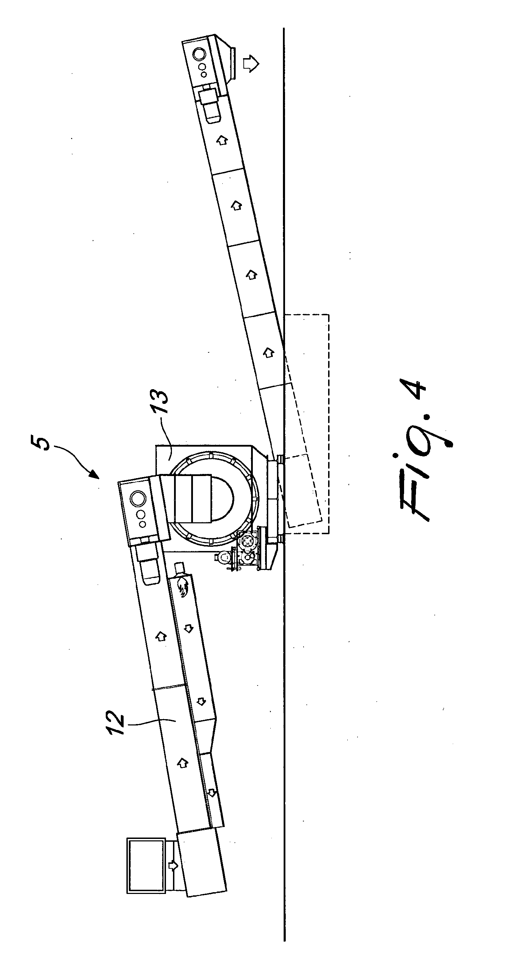

Figure 4 is a sectional view of the inertizing apparatus shown in Figure 1, taken along the line IV-IV;

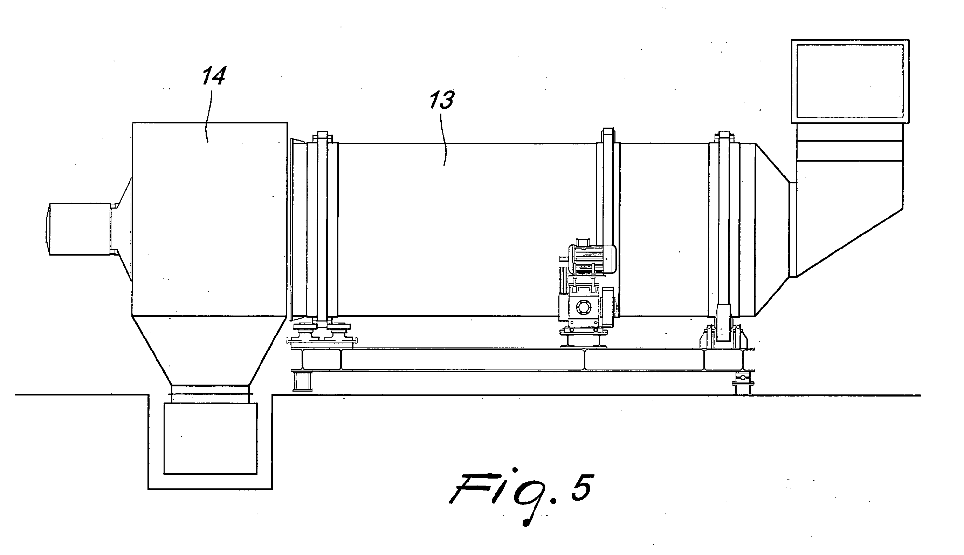

Figure 5 is a sectional view of the inertizing apparatus shown in Figure 1, taken along the line V-V;

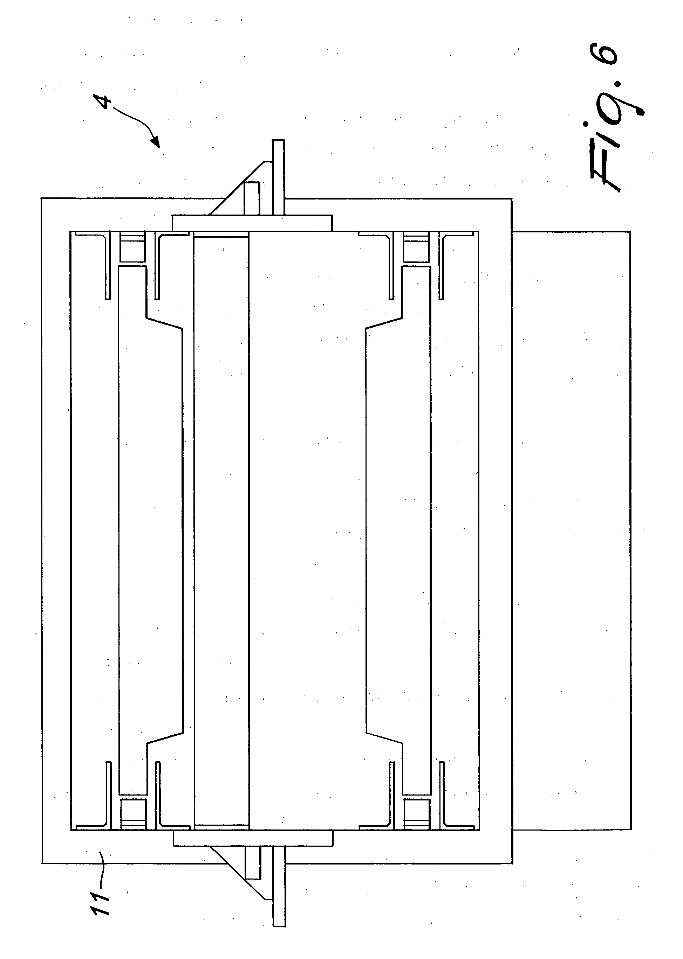

Figure 6 is a view of a detail of the handling system of the inertizing apparatus shown in Figure 1.

With reference to the figures, the apparatus for inertizing materials containing asbestos, generally designated by the reference numeral 1, comprises a unit 2 for granulating the material inserted in the apparatus 1, a preheating unit 3 arranged consecutively with respect to the granulation unit 2, a dehydroxylation unit 4 arranged consecutively with respect to the preheating unit 3, a decomposition unit 5 arranged consecutively with respect to the dehydroxylation unit 4, a reheating unit 6 arranged consecutively with respect to the decomposition unit 5, and a filtration unit 7 arranged consecutively with respect to the reheating unit 6.

The unit 2 for granulating the material introduced in the apparatus 1 is designed to give the material a uniform particle size distribution, ensuring thermal absorption of the material in the subsequent operations.

This comprises a system with rotating reels 8, which pick up the material introduced in the inlets 9 of the apparatus 1 and shred it, reaching the particle size distribution required for the subsequent steps.

The preheating unit 3 is designed to cause the evaporation of the water molecules contained in the material that exits from the granulation unit 2.

Water evaporation is provided by passing the material that exits from the granulation unit 2 through a first tunnel-type furnace 10 with catenary advancement.

The operating temperature, which is substantially equal to 100°C, is kept constant and controlled by recovery of the hot exhaust gases produced by the combustion of the material treated in the reheating unit 6.

These exhaust gases are introduced in the preheating unit 3 and are conveyed in countercurrent with respect to the flow of material introduced in the apparatus 1 to recover thermal energy.

More precisely, the exhaust gases produced by the combustion and heated in the reheating unit 6 are introduced in the first furnace 10 first in the lower part 10a and then in the upper part 10b, giving rise to an indirect heat exchange between the exhaust gases and the material that exits from the granulation unit 2.

The dehydroxylation unit 4 is designed to eliminate the hydro-hydroxyl group that is present in the crystalline structure of the asbestos contained in the material that exits from the preheating unit 3.

This is made possible by passing the material that exits from the preheating unit 3 through a second treatment stage, which consists in passing it through a second tunnel-type furnace 11 with direct flame and with catenary advancement, which heats the material progressively from an initial operating temperature, which is substantially equal to 150°C and is increased substantially to a maximum comprised between 400°C and 600°C depending on the type of asbestos treated.

More precisely, the operating temperature of the second furnace 11 must not be lower than 400°C with the presence of chrysotile-type asbestos in the material that exits from the preheating unit 3 or must not be lower 600°C with the presence of asbestos of the amosite or crocidolite type in the material that exits from the preheating unit 3.

The subsequent unit is the decomposition unit 5, which is designed to decompose the material that exits from the dehydroxylation unit 4 by means of heat, modifying its crystalline structure into an an irreversible amorphous structure.

This is made possible by passing the material that exits from the dehydroxylation unit 4 through a third tunnel-type furnace 12 with catenary advancement, and a fourth rotary-drum furnace 13, both of which are built with a first metallic structure that is typically made of steel and lined with refractory material, which can reach a maximum allowable temperature of 1250°C.

The operating temperatures of the decomposition unit 5 start substantially from 600°C and reach a maximum substantially equal to 1050°C.

Depending on the type of asbestos is treated, this step occurs at different temperatures, forming different composites.

More precisely, in the presence of chrysotile-type asbestos, the operating temperature of the decomposition unit 5 must not be lower than 650°C and the composites that are produced are accordingly forsterite and enstatite; in the presence of asbestos of the amosite type, the operating temperature of the decomposition unit 5 must not be lower than 850°C and the produced composites are consequently hematite, magnetite and cristobalite; finally, in the presence of asbestos of the crocidolite type, the operating temperature of the decomposition unit 5 must not be lower than 950°C and the produced composites are accordingly alkaline pyroxene, enstatite, hematite and cristobalite.

The reheating unit 6 comprises a chamber 14 that is built with a second metallic structure lined with refractory material and sized so as to ensure a retention time of the exhaust gases produced by combustion and heated in the reheating unit 5 of a few seconds at a preset reheating temperature that is maintained by a plurality of burners.

More precisely, the maximum reheating temperature is equal to 1200°C.

Although the reheating unit 6 is not affected directly by the treatment of the materials containing asbestos, it is considered part of the inertizing process, since it raises the temperature of the exhaust gases produced by combustion.

This reheating unit 6 allows the suppression of any volatile organic substances (VOS) and raises the temperature of the exhaust gases for their reuse, with consequent heat saving, in the preheating unit 3.

Finally, the filtration unit 7 is designed to suppress the residual effluents before they are introduced into the atmosphere by means of a bag filter 15 followed by an absolute filter 16.

The method for inertizing materials containing asbestos provided by the apparatus 1 is clear and evident from what has been described.

In particular, the inertizing method can be divided into three steps.

The first step is the dehumidification step.

In this step, the material containing asbestos is subjected to a thermal treatment to a temperature substantially equal to 100°C in order to cause the evaporation of all the water that is present in said material.

With reference to the apparatus 1, this step is provided by the preheating unit 3.

Subsequently, the dehydroxylation step is provided by means of the dehydroxylation unit 4, during which the hydro-hydroxyl group is eliminated from the crystalline structure of the asbestos contained in the material by progressive heating up to a maximum temperature comprised between 400°C and 600°C.

Finally, as a third and final step there is the decomposition step provided by the corresponding decomposition unit 5, in which the crystalline structure of the asbestos is modified into an irreversible amorphous structure as a consequence of the permanence of the material at a temperature that is not lower than a specific decomposition temperature, obtaining chemically inert compounds.

More precisely, the decomposition temperature, as well as the type of compounds obtained, vary depending on the type of asbestos treated.

In particular, if the asbestos is of the chrysotile type, the decomposition temperature is not lower than 650° and the resulting compounds are forsterite and/or enstatite.

If instead the asbestos is of the amosite type, the decomposition temperature is not lower than 850° and the resulting compounds are hematite and/or magnetite and/or cristobalite.

Finally, if the asbestos is of the crocidolite type, the decomposition temperature is not lower than 950° and the resulting compounds are alkaline pyroxene and/or enstatite and/or hematite and/or cristobalite.

In practice it has been found that the apparatus and method for inertizing materials containing asbestos according to the present invention fully achieve the intended aim and objects, since they allow to eliminate the water molecules that are present in the structure of the fibrous asbestos, converting it into other non-fibrous silicates, such as for example forsterite, enstatite and cristobalite, i.e., inert minerals that are present in nature.

Another advantage of the inertizing apparatus and method according to the present invention consists in that it uses, for their provision, components that are easily available, thus entailing modest costs.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An apparatus (1) for inertizing materials containing asbestos comprising.
- a unit (2) for granulating the material introduced in the apparatus, in order to give said material a uniform particle size distribution, ensuring the thermal absorption of said material in subsequent operations,
- a preheating unit (3), which is arranged consecutively with respect to said granulation unit for the evaporation of the molecules of water contained in said material that exits from said granulation unit,
- a dehydroxylation unit (4), which is arranged consecutively with respect to said preheating unit to eliminate the hydro-hydroxyl group that is present in the crystalline structure of the asbestos contained in said material that exits from said preheating unit,
- a decomposition unit (5), which is arranged consecutively with respect to said dehydroxylation unit for the decomposition, by means of heat, of said material that exits from said dehydroxylation unit, modifying its crystalline structure into an irreversible amorphous structure,
- a reheating unit (6), which is arranged consecutively with respect to said decomposition unit in order to raise the temperature of the exhaust gases produced by combustion and suppress volatile organic substances,
- a filtration unit (7), which is arranged consecutively with respect to said reheating unit to suppress residual effluents before they are introduced in the atmosphere.

2. The apparatus according to the preceding claim that configured such said exhaust gases deriving from the combustion and heated in said reheating unit are introduced in said preheating unit in countercurrent with respect to the flow of said material introduced in the apparatus for the recovery of heat energy.

3. The apparatus according to one or more of the preceding claims, **characterized in that** said granulation unit comprises a system with rotating reels.

4. The apparatus according to one or more of the preceding claims, **characterized in that** said preheating unit comprises a first tunnel-type furnace with catenary advancement, which is suitable to receive said material that exits from said granulation unit, said exhaust gases derived from combustion and heated in said reheating unit being introduced in said first furnace first in the lower part and then in the upper part, giving rise to an indirect heat exchange between said exhaust gases derived from combustion and heated in said reheating unit and said material that exits from said granulation unit.

5. The apparatus according to the preceding claim 4, **characterized in that** the operating temperature of said first tunnel-type furnace is substantially equal to 100°C.

6. The apparatus according to one or more of the preceding claims 4-5, **characterized in that** said dehydroxylation unit comprises a second tunnel-type furnace with direct flame with catenary advancement and with an operating temperature that is initially equal to substantially 150°C and increased substantially to 600°C.

7. The apparatus according to the preceding claim 6, configured such that the operating temperature of said second furnace is not lower than 400°C with the presence of asbestos of the chrysotile type in said material that exits from said preheating unit or not lower than 600°C with the presence of asbestos of the amosite or crocidolite type in said material that exits from said preheating unit.

8. The apparatus according to one or more of the preceding claims 6-7, **characterized in that** said decomposition unit comprises a third tunnel-type furnace with catenary advancement and a fourth rotary drum furnace, both of which are built with a first metallic structure lined with refractory material.

9. The apparatus according to the preceding claim 8, **characterized in that** said first metallic structure is made of steel.

10. The apparatus according to one or more of the preceding claims 8, 9, configured such that the operating temperatures of said decomposition unit start substantially from 600°C and reach a maximum substantially equal to 1050°C.

11. The apparatus according to one or more of the preceding claims 8 to 10, **characterized in that** the maximum allowable temperature in said decomposition unit is equal to 1250°C.

12. The apparatus according to one or more of the preceding claims 8 to 11, configured such that the operating temperature of said decomposition unit is not
lower than 650°C with the presence of asbestos of the chrysotile type in said material that exits from said dehydroxylation unit, not lower than 850°C with the the presence of asbestos of the amosite type in said material that exits from said dehydroxylation unit, or nor lower than 950°C with the presence of asbestos of the crocidolite type in said material that exits from said dehydroxylation unit.

13. The apparatus according to one or more of the preceding claims 8-12, **characterized in that** said reheating unit comprises a chamber that is built with a second metallic structure lined with refractory material and is sized to ensure a retention time of said exhaust gases produced by combustion and heated in said reheating unit of a few seconds at a preset reheating temperature maintained by a plurality of burners.

14. The apparatus according to the preceding claim 13, **characterized in that** said maximum reheating temperature is equal to 1200°C.

15. The apparatus according to one or more of the preceding claims, **characterized in that** said filtration unit comprises a bag filter followed by an absolute filter.

16. A method for inertizing materials containing asbestos using the apparatus according to claim 1, comprising the steps that consist in:
- dehumidifying the material containing asbestos in the preheating unit (3), which is subjected to a thermal treatment to a temperature substantially equal to 100°C in order to cause the evaporation of all the water that is present in said material,
- dehydroxylating said material in the dehydroxylation unit (4) after said dehumidification step, said the hydro-hydroxyl group being eliminated during said dehydroxylation step from the crystalline structure of the asbestos contained in said material by means of progressive heating up to a maximum temperature comprised between 400°C and 600°C,
- decomposing said material in the decomposition unit (5) after said dehydroxylation step, in said decomposition step said crystalline structure of said asbestos being modified into an irreversible amorphous structure as a consequence of the permanence of said material at a temperature that is not lower than a specific decomposition temperature, obtaining chemically inert compounds.

17. The method according to claim 16, **characterized in that** said asbestos is of the chrysotile type.

18. The method according to one or more of claims 16 and 17, **characterized in that** said decomposition temperature is not lower than 650°.

19. The method according to one or more of claims 16 to 18, **characterized in that** said compounds are forsterite and/or enstatite.

20. The method according to claim 16, **characterized in that** said asbestos is of the amosite type.

21. The method according to one or more of claims 16 to 20, **characterized in that** said decomposition temperature is not lower than 850°.

22. The method according to one or more of claims 16, 20 and 21, **characterized in that** said compounds are hematite and/or magnetite and/or cristobalite.

23. The method according to claim 16, **characterized in that** said asbestos is of the crocidolite type.

24. The method according to one or more of claims 16 and 23, **characterized in that** said decomposition temperature is not lower than 950°.

25. The method according to one or more of claims 16, 23 and 24, **characterized in that** said compounds are alkaline pyroxene and/or enstatite and/or hematite and/or cristobalite.

## Patentansprüche

1. Vorrichtung (1) zum Inertisieren von Asbest enthaltenden Materialien, mit:
- einer Einheit (2) zum Granulieren des in die Vorrichtung eingebrachten Materials, um dem Material eine gleichmäßige Partikelgrößenverteilung zu verleihen, womit die Wärmeaufnahme des Materials in nachfolgenden Arbeitsgängen sichergestellt ist,
- eine Vorheizungseinheit (3), die der Granulierungseinheit nachfolgend angeordnet ist, zum Verdampfen der Wassermoleküle, die in dem Material enthalten sind, das aus der Granulierungseinheit austritt,
- eine Dehydroxylierungseinheit (4), die der Vorheizungseinheit nachfolgend angeordnet ist, um die in der kristallinen Struktur des Asbestes vorhandene Hydro-Hydroxylgruppe zu entfernen, das in dem aus der Vorheizungseinheit austretenden Material enthalten ist,
- eine Zersetzungseinheit (5), die der Dehydroxylierungseinheit nachfolgend angeordnet ist, zum Zersetzen des aus der Dehydroxylierungseinheit austretenden Materials mittels Hitze, wobei dessen kristalline Struktur zu einer irreversiblen amorphen Struktur verändert wird,
- eine Wiederaufheizungseinheit (6), die der Zersetzungseinheit nachfolgend angeordnet ist, um die Temperatur der durch Verbrennung produzierten Abgase zu erhöhen und flüchtige organische Substanzen niederzuhalten,
- eine Filtrationseinheit (7), die der Wiederaufheizungseinheit nachfolgend angeordnet ist, um Restabwässer niederzuhalten, bevor sie in die Atmosphäre geleitet werden.

2. Vorrichtung nach dem vorhergehenden Anspruch, die so ausgebildet ist, dass Abgase, die aus der Verbrennung stammen und in der Wiederaufheizungseinheit erhitzt werden, in die Wiederaufheizungseinheit im Gegenstrom bezüglich des Stroms des in die Vorrichtung eingebrachten Materials eingebracht werden, um Heizenergie zurückzugewinnen.

3. Vorrichtung nach einem oder mehreren der vorhergehenden Ansprüche, **dadurch gekennzeichnet, dass** die Granulierungseinheit ein System mit sich drehenden Rollen umfasst.

4. Vorrichtung nach einem oder mehreren der vorhergehenden Ansprüche, **dadurch gekennzeichnet, dass** die Vorheizungseinheit einen ersten tunnelartigen Ofen mit einer Kettenlinienförderung umfasst, der geeignet ist, das aus der Granulierungseinheit austretende Material aufzunehmen, wobei die aus der Verbrennung stammenden und in der Wiederaufheizungseinheit erhitzten Gase in den ersten Ofen zuerst in den unteren Teil und dann in den oberen Teil eingebracht werden, was einen indirekten Hitzeaustausch zwischen den aus der Verbrennung stammenden und in der Wiederaufheizungseinheit erhitzten Gasen und dem aus der Granulierungseinheit austretenden Material bewirkt.

5. Vorrichtung nach dem vorhergehenden Anspruch 4, **dadurch gekennzeichnet, dass** die Arbeitstemperatur des ersten tunnelartigen Ofens im Wesentlichen gleich 100°C ist.

6. Vorrichtung nach einem oder mehreren der vorhergehenden Ansprüche 4-5, **dadurch gekennzeichnet, dass** die Dehydroxylierungseinheit einen zweiten tunnelartigen Ofen mit direkter Flamme mit Kettenlinienförderung und mit einer Arbeitstemperatur, die zunächst im Wesentlichen gleich 150°C ist und auf im Wesentlichen 600°C erhöht wird, umfasst.

7. Vorrichtung nach dem vorhergehenden Anspruch 6, die so ausgebildet ist, dass die Arbeitstemperatur des zweiten Ofens nicht niedriger als 400°C bei Anwesenheit von Chrysotil-Asbest in dem Material, das aus der Vorheizungseinheit austritt, oder nicht niedriger als 600°C bei Anwesenheit von Amosit- oder Crocidolit-Asbest in dem Material, das aus der Vorheizungseinheit austritt, ist.

8. Vorrichtung nach einem oder mehreren der vorhergehenden Ansprüche 6-7, **dadurch gekennzeichnet, dass** die Zersetzungseinheit einen dritten tunnelähnlichen Ofen mit Kettenlinienförderung und einen vierten Drehtrommelofen umfasst, die beide mit einer metallischen, mit feuerfestem Material ausgekleideten Struktur gebaut sind.

9. Vorrichtung nach dem vorhergehenden Anspruch 8, **dadurch gekennzeichnet, dass** die erste metallische Struktur aus Stahl besteht.

10. Vorrichtung nach einem oder mehreren der vorhergehenden Ansprüche 8, 9, die so ausgebildet ist, dass die Arbeitstemperaturen der Zersetzungseinheit bei im Wesentlichen 600°C beginnen und ein Maximum erreichen, das im Wesentlichen gleich 1050°C ist.

11. Vorrichtung nach einem oder mehreren der vorhergehenden Ansprüche 8 bis 10, **dadurch gekennzeichnet, dass** die maximal zulässige Temperatur in der Zersetzungseinheit gleich 1250°C ist.

12. Vorrichtung nach einem oder mehreren der vorhergehenden Ansprüche 8 bis 11, die so ausgebildet ist, dass die Arbeitstemperatur der Zersetzungseinheit nicht niedriger als 650°C bei Anwesenheit von Chrysotil-Asbest in dem Material, das aus der Dehydroxylierungseinheit austritt, nicht niedriger als 850°C bei Anwesenheit von Amosit-Asbest in dem Material, das aus der Dehydroxylierungseinheit austritt, oder nicht niedriger als 950°C bei Anwesenheit von Crocidolit-Asbest in dem Material, das aus der Dehydroxylierungseinheit austritt, ist.

13. Vorrichtung nach einem oder mehreren der vorhergehenden Ansprüche 8 bis 12, **dadurch gekennzeichnet, dass** die Wiederaufheizungseinheit eine Kammer umfasst, die mit einer zweiten metallischen, mit feuerfestem Material ausgekleideten Struktur gebaut ist und die so ausgelegt ist, dass eine Verweilzeit der durch Verbrennung produzierten und in der Wiederaufheizungseinheit erhitzten Abgase von einigen Sekunden bei einer voreingestellten Temperatur gewährleistet wird, die durch eine Vielzahl von Brennern aufrechterhalten wird.

14. Vorrichtung nach dem vorhergehenden Anspruch 13, **dadurch gekennzeichnet, dass** die maximale Wiederaufheizungstemperatur gleich 1200°C ist.

15. Vorrichtung nach einem oder mehreren der vorhergehenden Ansprüche, **dadurch gekennzeichnet, dass** die Filtrationseinheit ein Taschenfilter, dem ein Absolutfilter folgt, umfasst.

16. Verfahren zum Inertisieren von Asbest enthaltenden Materialien unter Verwendung der Vorrichtung nach Anspruch 1, das die folgenden Schritte umfasst:
- Entfeuchten des den Asbest enthaltenden Materials in der Vorheizungseinheit (3), das einer thermischen Behandlung bei einer Temperatur, die im Wesentlichen gleich 100°C ist, ausgesetzt ist, um die Verdunstung des gesamten in dem Material vorhandenen Wassers zu bewirken,
- Dehydroxylieren des Materials in der Dehydroxylierungseinheit (4) nach dem Entfeuchtungsschritt, wobei die Hydro-Hydroxylgruppe während des Dehydroxylierungsschrittes aus der kristallinen Struktur des in dem Material enthaltenen Asbestes durch schrittweises Aufheizen bis zu einer maximalen Temperatur, die zwischen 400°C und 600°C liegt, entfernt wird,
- Zersetzen des Materials in der Zersetzungseinheit (5) nach dem Dehydroxylierungsschritt, wobei die kristalline Struktur des Asbestes in dem Zersetzungsschritt zu einer irreversiblen amorphen Struktur verändert wird als Folge der Permanenz des Materials bei einer Temperatur, die nicht niedriger als eine bestimmte Zersetzungstemperatur ist, wobei chemisch inerte Verbindungen gewonnen werden.

17. Verfahren nach Anspruch 16, **dadurch gekennzeichnet, dass** der Asbest Chrysotil-Asbest ist.

18. Verfahren nach einem oder mehreren der Ansprüche 16 und 17, **dadurch gekennzeichnet, dass** die Zersetzungstemperatur nicht niedriger als 650° ist.

19. Verfahren nach einem oder mehreren der Ansprüche 16 bis 18, **dadurch gekennzeichnet, dass** die Verbindungen Forsterit und/oder Enstatit sind.

20. Verfahren nach Anspruch 16, **dadurch gekennzeichnet, dass** der Asbest Amosit-Asbest ist.

21. Verfahren nach einem oder mehreren der Ansprüche 16 bis 20, **dadurch gekennzeichnet, dass** die Zersetzungstemperatur nicht niedriger als 850° ist.

22. Verfahren nach einem oder mehreren der Ansprüche 16, 20 und 21, **dadurch gekennzeichnet, dass** die Verbindungen Hämatit und/oder Magnetit und/oder Cristobalit sind.

23. Verfahren nach Anspruch 16, **dadurch gekennzeichnet, dass** der Asbest Crocidolit-Asbest ist.

24. Verfahren nach einem oder mehreren der Ansprüche 16 und 23, **dadurch gekennzeichnet, dass** die Zersetzungstemperatur nicht niedriger als 950° ist.

25. Verfahren nach einem oder mehreren der Ansprüche 16, 23 und 24, **dadurch gekennzeichnet, dass** die Verbindungen alkalisches Pyroxen und/oder Enstatit und/oder Hämatit und/oder Cristobalit sind.

## Revendications

1. Appareil (1) pour rendre inerte des matériaux contenant de l'amiante, comprenant:
- une unité (2) pour granuler le matériau introduit dans l'appareil dans le but de conférer audit matériau une distribution de taille de particule uniforme pour assurer l'absorption thermique dudit matériau lors des opérations suivantes;
- une unité de préchauffage (3) qui est disposée à la suite de ladite unité de granulation pour l'évaporation des molécules d'eau contenues dans ledit matériau qui sort de ladite unité de granulation;
- une unité de déshydroxylation (4) qui est disposée à la suite de ladite unité de préchauffage dans le but d'éliminer le groupe hydro-hydroxyle qui est présent dans la structure cristalline de l'amiante contenu dans ledit matériau qui sort de ladite unité de préchauffage;
- une unité de décomposition (5) qui est disposée à la suite de ladite unité de déshydroxylation pour la décomposition, en utilisant de la chaleur, dudit matériau qui sort de ladite unité de déshydroxylation, en modifiant sa structure cristalline en une structure amorphe irréversible;
- une unité de réchauffage (6) qui est disposée à la suite de ladite unité de décomposition dans le but d'augmenter la température des gaz d'échappement produits par la combustion et de supprimer les substances organiques volatiles;
- une unité de filtration (7) qui est disposée à la suite de ladite unité de réchauffage dans le but de supprimer les effluents résiduels avant qu'ils soient introduits dans l'atmosphère.

2. Appareil selon la revendication précédente, configuré de telle sorte que lesdits gaz d'échappement dérivés de la combustion et chauffés dans ladite unité de réchauffage soient introduits dans ladite unité de préchauffage à contre-courant par rapport à l'écoulement dudit matériau introduit dans l'appareil pour la récupération d'énergie thermique.

3. Appareil selon une ou plusieurs des revendications précédentes, **caractérisé en ce que** ladite unité de granulation comprend un système équipé de bobines rotatives.

4. Appareil selon une ou plusieurs des revendications précédentes, **caractérisé en ce que** ladite unité de préchauffage comprend un premier four de type tunnel à avancement par chaînette qui est approprié pour recevoir ledit matériau qui sort de ladite unité de granulation, lesdits gaz d'échappement dérivés de la combustion et chauffés dans ladite unité de réchauffage étant introduits dans ledit premier four d'abord dans la partie inférieure et ensuite dans la partie supérieure, engendrant un échange de chaleur indirect entre lesdits gaz d'échappement dérivés de la combustion et chauffés dans ladite unité de réchauffage et ledit matériau qui sort de ladite unité de granulation.

5. Appareil selon la revendication précédente 4, **caractérisé en ce que** la température de fonctionnement dudit premier four de type tunnel est sensiblement égale à 100°C.

6. Appareil selon une ou plusieurs des revendications précédentes 4 et 5, **caractérisé en ce que** ladite unité de déshydroxylation comprend un deuxième four de type tunnel à flamme directe à avancement par chaînette et dont la température de fonctionnement est initialement égale à sensiblement 150°C et est augmentée sensiblement jusqu'à 600°C.

7. Appareil selon la revendication précédente 6, configuré de telle sorte que la température de fonctionnement dudit deuxième four ne soit pas inférieure à 400°C en présence d'amiante du type chrysotile dans ledit matériau qui sort de ladite unité de préchauffage, ou pas inférieure à 600°C en présence d'amiante du type amosite ou crocidolite dans ledit matériau qui sort de ladite unité de préchauffage.

8. Appareil selon une ou plusieurs des revendications précédentes 6 et 7, **caractérisé en ce que** ladite unité de décomposition comprend un troisième four de type tunnel à avancement par chaînette et un quatrième four à tambour rotatif qui sont tous les deux constitués d'une première structure métallique garnie d'un matériau réfractaire.

9. Appareil selon la revendication précédente 8, **caractérisé en ce que** ladite première structure métallique est constituée d'acier.

10. Appareil selon une ou plusieurs des revendications précédentes 8 et 9, configuré de telle sorte que les températures de fonctionnement de ladite unité de décomposition démarrent sensiblement à 600°C et atteignent un maximum qui est sensiblement égal à 1050°C.

11. Appareil selon une ou plusieurs des revendications précédentes 8 à 10, **caractérisé en ce que** la température admissible maximum dans ladite unité de décomposition est égale à 1250°C.

12. Appareil selon une ou plusieurs des revendications précédentes 8 à 11, configuré de telle sorte que la température de fonctionnement de ladite unité de décomposition ne soit pas inférieure à 650°C en présence d'amiante du type chrysotile dans ledit matériau qui sort de ladite unité de déshydroxylation, pas inférieure à 850°C en présence d'amiante du type amosite dans ledit matériau qui sort de ladite unité de déshydroxylation, ou pas inférieure à 950°C en présence d'amiante du type crocidolite dans ledit matériau qui sort de ladite unité de déshydroxylation.

13. Appareil selon une ou plusieurs des revendications précédentes 8 à 12, **caractérisé en ce que** ladite unité de réchauffage comprend une chambre qui est constituée d'une deuxième structure métallique garnie d'un matériau réfractaire et qui est dimensionnée de manière à assurer un temps de rétention desdits gaz d'échappement produits par la combustion et chauffés dans ladite unité de réchauffage de quelques secondes à une température de réchauffage préréglée qui est maintenue par une pluralité de brûleurs.

14. Appareil selon la revendication précédente 13, **caractérisé en ce que** ladite température de réchauffage maximum est égale à 1200°C.

15. Appareil selon une ou plusieurs des revendications précédentes, **caractérisé en ce que** ladite unité de filtration comprend un filtre à sac suivi d'un filtre absolu.

16. Procédé pour rendre inerte des matériaux contenant de l'amiante en utilisant l'appareil selon la revendication 1, comprenant les étapes qui consistent en:
- déshumidifier le matériau contenant de l'amiante dans l'unité de préchauffage (3) qui est soumise à un traitement thermique à une température sensiblement égale à 100°C dans le but de provoquer l'évaporation de la totalité de l'eau présente dans ledit matériau;
- déshydroxyler ledit matériau dans l'unité de déshydroxylation (4) après ladite étape de déshumidification, ledit groupe hydro-hydroxyle étant éliminé pendant ladite étape de déshydroxylation de la structure cristalline de l'amiante contenu dans ledit matériau en appliquant un chauffage progressif à une température maximum comprise entre 400°C et 600°C;
- décomposer ledit matériau dans l'unité de décomposition (5) après ladite étape de déshydroxylation, lors de ladite étape de décomposition ladite structure cristalline étant modifiée en une structure amorphe irréversible à la suite du maintien dudit matériau à une température qui n'est pas inférieure à une température de décomposition spécifique, obtenant ainsi des composés chimiquement inertes.

17. Procédé selon la revendication 16, **caractérisé en ce que** ledit amiante est du type chrysotile.

18. Procédé selon une ou plusieurs des revendications 16 et 17, **caractérisé en ce que** ladite température de décomposition n'est pas inférieure à 650°C.

19. Procédé selon une ou plusieurs des revendications 16 à 18, **caractérisé en ce que** lesdits composés sont la forstérite et/ou l'enstatite.

20. Procédé selon la revendication 16, **caractérisé en ce que** ledit amiante est du type amosite.

21. Procédé selon une ou plusieurs des revendications 16 à 20, **caractérisé en ce que** ladite température de décomposition n'est pas inférieure à 850°C.

22. Procédé selon une ou plusieurs des revendications 16, 20 et 21, **caractérisé en ce que** lesdits composés sont l'hématite et/ou la magnétite et/ou la cristobalite.

23. Procédé selon la revendication 16, **caractérisé en ce que** ledit amiante est du type crocidolite.

24. Procédé selon une ou plusieurs des revendications 16 et 23, **caractérisé en ce que** ladite température de décomposition n'est pas inférieure à 950°C.

25. Procédé selon une ou plusieurs des revendications 16, 23 et 24, **caractérisé en ce que** lesdits composés sont le pyroxène alcalin et/ou l'enstatite et/ou l'hématite et/ou la cristobalite.
